# EUROPÄISCHE PATENTSCHRIFT

(11) **EP 2 927 660 B1**
(45) Veröffentlichungstag und Bekanntmachung des Hinweises auf die Patenterteilung: **12.10.2016**
(21) Anmeldenummer: 14001257.6
(22) Anmeldetag: 04.04.2014
(51) Int. Cl.: G01M 7/02, G01M 7/06

(54) **Vorrichtung zur Belastungsprüfung rotatorischer Prüflinge**
Device for testing rotary test samples under load
Dispositif d'essai de charge d'échantillons rotatifs

(43) Veröffentlichungstag der Anmeldung: 07.10.2015
(73) Patentinhaber: Prisma Engineering Maschinen- und Motorentechnik GmbH, 8041 Graz (AT)
(72) Erfinder: Gschweitl, Ernst, 8200 Gleisdorf (AT)
(74) Vertreter: Grättinger Möhring von Poschinger Patentanwälte Partnerschaft

(56) Entgegenhaltungen:
- US-B1- 6 247 366

## Beschreibung

Die Erfindung betrifft eine Vorrichtung gemäß dem Oberbegriff von Patentanspruch 1.

Ein Resonanzprüfstand dieser Art ist in der Deutschen Patentschrift DE 102010027897 B4 beschrieben. Die bekannte Schwingungsprüfeinrichtung benutzt zur Erzeugung der mechanischen Beaufschlagung eines Prüflings durch eine periodisch oszillierende Belastung einen Resonanzprüfaktuator. Das gesamte Schwingungssystem ist auf Federn gelagert. Damit soll eine Schwingungsprüfeinrichtung geschaffen werden, mittels welcher unter Beachtung des energetischen und zeitlichen Aufwands ein Prüfling mehrdimensionalen Belastungen ausgesetzt werden kann. Der Prüfling wird dabei mittels des Aktuators zu Schwingungen mit seiner Resonanzfrequenz angeregt, wobei die Resonanzüberhöhung der Übertragungsfunktion des Schwingungssystems ausgenutzt werden kann. Durch die Nutzung von zwei Resonanzprüfaktuatoren gelingt es, zwei Schwingungssysteme zur Verprobung unterschiedlicher Belastungen einzusetzen, wie beispielsweise zur Untersuchung der Biegesteifigkeit und/oder der Torsionssteifigkeit eines Prüflings.

Bei der bekannten Resonanzprüfvorrichtung ist der Prüfling mit Zusatzmassen und Zusatzfedern fest verbunden, ebenso die Aktuatoren. Diese Prüfmethode genügt nur eingeschränkt den Anforderungen betriebsgleicher Prüfbedingungen. Dies gilt insbesondere für die Verprobung der Umlaufbiegung bei gefügten rotationssymmetrischen Bauteilen, wie Radsätzen von Schienenfahrzeugen, wo es darum geht, eine bestimmte Verteilung der Biegemomente über die Länge einer umlaufenden Welle zu verproben.

Hierzu ist bei einer anderen bekannten Einrichtung zur betriebsähnlichen Prüfung von Radsätzen (Deutsche Patentschrift 2601259) vorgesehen, dass ein Rad eines Radsatzes innerhalb einer umlaufenden Trommel rotiert und durch deren Schrägstellen mit über den Radaufstandspunkt eingeleiteten Prüfkräften belastet wird. Die Schwingungsprüfung wird dadurch simuliert, dass das Schrägstellen der Trommel über deren Abstützung auf einem Schwingtisch erfolgt. Auf diese Weise ist es möglich, die Umlaufbiegung der Welle unter betriebsnahen Bedingungen zu verproben.

Eine Mehrfachbelastungen u. a. durch Vibrationen simulierende Vorrichtung in Art eines Rütteltischs zur Prüfung der Designreife von Gegenständen ist in US 6,247,366 beschrieben.

Demgegenüber besteht die Aufgabe der vorliegenden Erfindung darin, einen Resonanzprüfstand für rotatorische Prüflinge zu schaffen, welcher bei hoher Prüffrequenz und Genauigkeit mit minimalen Prüfkräften der Erregerschwingung auf seiten der Aktuatoren auskommt, somit in Leichtbauweise und bei Vermeidung hoher Fundamentbelastungen herstellbar ist.

Diese Aufgabe wird nach der Erfindung gemäß den Merkmalen von Patentanspruch 1 gelöst.

Der erfindungsgemäße Lösungsvorschlag ist insbesondere dadurch gekennzeichnet, dass der Prüfling, der den Schwingkörper bildet, auf einem Maschinentisch feststehend abgestützt ist und insoweit einen tragenden Teil des Prüfstands bildet. Aktuatoren des Schwingungssystems versetzen den Prüfling in Schwingungen bevorzugt bei oder nahe der Resonanzfrequenz; dabei werden über Koppelstäbe von den Aktuatoren in Punkten auf einer Kreisbahn um eine Drehachse des Prüflings oszillierende Kräfte auf den Prüfling übertragen. Die als Elemente dieser Übertragung vorgesehenen Koppelstäbe sind mit ihren Enden jeweils mechanisch eingespannt, einerseits am Aktuator, andererseits am Prüfling und üben auf diese Weise ein um die feststehende Drehachse des Prüflings entsprechend der Erregerschwingung umlaufendes Moment aus.

Die Verwendung von Koppelstäben als Übertragungselemente der Erregerschwingung ermöglicht deren Anordnung durch geeignete Wahl ihres Kraftangriffs derart, dass das Schwingungssystem im dynamischen Verformungsnullpunkt auf der Drehachse des Prüflings einwirkt. Da auf diese Weise keine Schwingungsenergie an die Umgebung verloren geht, kann der Resonanzprüfstand insgesamt mit kleinen Anregungskräften und geringer Antriebsenergie arbeiten. In dem hierbei die wesentlichen Kräfte vom Prüfling selbst aufgenommen werden kann die Prüfmaschine insgesamt in Leichtbauweise hergestellt werden. Der Maschinentisch ist lediglich dem Gewicht des Prüflings anzupassen; gesonderte Fundamente können gänzlich entfallen.

Beim erfindungsgemäßen Schwingungssystem sind sowohl der Prüfling als auch die Aktuatoren jeweils in ihren dynamischen Nullpunkten (Nullpunktsebene) an den Koppelstäben angebunden, so dass Störungen durch Umwuchteinflüsse gänzlich unterbleiben.

Durch die Einstellung des Schwingungssystems auf eine Erregerfrequenz bei oder nahe der Resonanzfrequenz des Prüflings ist zur Erzeugung der Schwingungsenergie ein erheblicher Vergrößerungsfaktor erzielbar, wodurch der Apparateaufwand für die Aktuatoren stark reduziert werden kann.

Im Rahmen der erfindungsgemäßen Vorrichtung besteht grundsätzlich die Möglichkeit, dass noch ein weiteres Schwingungssystem zur Verprobung der Torsionsbelastung vorgesehen ist. Der Prüfling ist hierbei über wenigstens zwei bezüglich der Drehachse des Prüflings gegenüberliegend und mit gleichen Abständen angeordneten im wesentlichen vertikalen Koppelstäben mit einem auf dem Maschinentisch abgestützten Aktuator spielfrei gekoppelt, derart, dass die Koppelstäbe der eingestellten Erregerschwingung entsprechende Kräfte auf den Prüfling zur Verprobung der Torsionsbelastung übertragen.

Durch eine derartige Kombination zweier Schwingungssysteme, eines für die Verprobung der Umlaufbiegung, ein weiteres für die Verprobung der Torsionsbelastung des Prüflings kann es zu Überlagerungseffekten der Schwingungssysteme kommen, die entweder zu Messungenauigkeiten führen können oder der realen Schwingungsbelastung nur mit Einschränkung entsprechen. Es kann daher zweckmäßig sein, die beiden Schwingungsmodi nicht simultan sondern zeitlich getrennt zu betätigen.

Dies bedeutet, dass die Vorrichtung mit an den jeweiligen Betriebsmodus angepassten Aktuatoren entweder zur Verprobung der Umlaufbiegung oder der Torsionsbelastung eines auf der Vorrichtung aufgebauten Prüflings betätigt wird, wobei die Anordnung des Prüflings für beide Betriebsmodi unverändert erhalten bleibt.

Für den "Biegemodus" zur Verprobung der Umlaufbiegung gilt, dass die Koppelstäbe einerseits mit dem Prüfling, andererseits mit einem Aktuator bei im wesentlichen fester Einspannung ihrer Enden somit gänzlich oder nahezu spielfrei verbunden sind.

Die Enden der Koppelstäbe können dabei jeweils mittels einer dreh- und biegeelastischen aber insgesamt festen Fügeverbindung eingespannt sein. Dadurch wird die Erregerschwingung praktisch behinderungsfrei übertragen.

Ferner ist für den Biegemodus vorteilhaft, dass die Koppelstäbe mit dem Prüfling über daran befestigte Adaptoren verbunden sind. Auf diese Weise gelingt es, auch für die Prüfung von Radsätzen mit über die Räder hinaus verlängerten Radachsen die zugeordneten Enden der Koppelstäbe in der Nullpunktsebene des Radsatzes, nämlich im Bereich der Verlängerungen zu befestigen. Auch bei Radsätzen ohne derartige Verlängerungen kann es zur genauen Schwingungseinleitung in der Nullpunktsebene vorteilhaft sein, Adaptoren zwischen den Rädern anzuordnen.

Zweckmäßigerweise können die Adaptoren jeweils als Nabenteil mit einseitig daran vorgesehenem Befestigungsflansch zur zentrischen Befestigung bezüglich der Drehachse von Radsätzen jeweils an der Außenseite der Räder, ausgebildet sein.

Bei Radsätzen mit zwischen den Rädern angeordneten Lagern werden die Adaptoren bevorzugt den Lagerstellen zugeordnet und an den Innenseiten der Räder befestigt, so dass auch hier die Nullpunktsebene durch die Nabenteile der Adaptoren verläuft, wo die Enden der Koppelstäbe eingespannt werden.

Im Falle eines Prüflings in Form eines Radsatzes für ein Schienenfahrzeug mit einer Verlängerung der Radachse über die Räder hinaus kann vorteilhaft am Nabenteil des Adapters gegenüber dessen Befestigungsflansch eine Schwungmasse vorgesehen sein. Die Koppelstäbe werden dabei in der Ebene des dynamischen Nullpunks außen auf dem Nabenteil eingespannt. Auf diese Weise kann der gewünschte Biegemomentenverlaufs in Richtung der Radsatzachse, z.B. die sogenannte 4-Punkt-Biegung, verwirklicht werden.

Für die Verprobung eines Prüflings im Biegemodus ist erfindungsgemäß ferner vorgesehen, dass die Aktuatoren jeweils ein auf einer rotierenden Erregerwelle mit darauf versetzt angeordneten Exzentermassen gelagertes Aktuatorgehäuse umfassen, welches mit der Erregerwelle ein Schwingungssystem bildet und mittels der Koppelstäbe die Erregerschwingung auf den Prüfling überträgt.

Die Lagerung des Aktuatorgehäuses kann durch Zulassung eines begrenzten Lagerspiels für die Ausbildung einer effektiven Erregerschwingung von Vorteil sein.

Dabei weisen die Aktuatoren zweckmäßig jeweils wenigstens ein Paar Exzentermassen auf, die zueinander um 180° versetzt auf der Erregerwelle angeordnet sind. Es kommen üblicherweise gleichgroße Exzentermassen infrage.

Eine besonders vorteilhafte Ausgestaltung der Aktuatoren besteht in diesem Zusammenhang darin, dass die Erregerwelle radial begrenzt beweglich mit einer Antriebsachse verbunden ist, die auf einem auf dem Maschinentisch befestigten Lagerbock gelagert ist, derart, dass bei laufender Erregung das Aktuatorgehäuse eine Schwingungsbewegung durchführt, welche der Erregerschwingung entspricht.

Durch diese Aufhängung wird es dem Aktuatorgehäuse ermöglicht, sich während der Rotation der Erregerwelle in der jeweils eingestellten Erregerfrequenz an die Umlaufbiegung des in der Erregerfrequenz schwingenden Prüflings in Art einer Taumelbewegung anzupassen, wobei die Koppelstäbe ihre horizontale Ausgangsposition im wesentlichen beibehalten.

Eine besonders vorteilhafte Anwendung des erfindungsgemäßen Resonanzprüfstands betrifft die Verprobung der Umlaufbiegung und/oder der Torsionsbelastung von Radsätzen für Schienenfahrzeuge, wobei Aktuatoren jeweils an den gegenüberliegenden Enden der die beiden Räder tragenden Radachse angeordnet sind.

Dabei ist an jedem Ende der Radachse ein erster Aktuator für die Verprobung der Umlaufbiegung über vier horizontale Koppelstäbe mit dem Adapter des zugeordneten Rads und ein zweiter Aktuator für die Verprobung der Torsionsbelastung über zwei vertikale Koppelstäbe mit dem Adapter des jeweiligen Endes der Radachse gekoppelt, wobei der Radsatz in horizontaler und in vertikaler Richtung zwischen allen Koppelstäben ortsfest abgestützt ist.

Auf diese Weise besteht die Möglichkeit, mittels der Koppelstäbe einerseits für die Verprobung der Umlaufbiegung, andererseits für die Verprobung der Torsionsbelastung den Radsatz allein über die Koppelstäbe auf dem Maschinentisch zu lagern.

Bei Radsätzen mit seitlich über die Räder hinaus erstreckten Radachsen ist erfindungsgemäß vorgesehen, dass der Radsatz an beiden Wellenenden durch lösbar angebaute Adaptoren verlängert ist, an welchen die Koppelstäbe befestigt sind und die von den Aktuatoren jeweils erzeugte Erregerschwingung nach einer Sinusfunktion oszillierende Kräfte auf die Adaptoren übertragen. Die Adaptoren sind dabei bevorzugt jeweils außenseitig an den Rädern der Radsätze angebaut.

Für den Betrieb der Vorrichtung im dynamischen Nullpunkt der Biegelinie des Radsatzes ist es vorteilhaft, dass die dem jeweiligen Aktuator fernen Enden der Koppelstäbe in oder nahe der Ebene des Verformungsnullpunkts des Radsatzes oder seiner Radachse am Adaptor befestigt werden.

Für den Einsatz des erfindungsgemäßen Resonanzprüfstands zur Verprobung der Torsionsbelastung wird das Torsionsmoment über die vertikalen Koppelstäbe zwischen einem auf dem Maschinentisch abgestützten Aktuator und dem darüber angeordneten Prüfling übertragen. Handelt es sich bei dem Prüfling um einen Radsatz, der beidseitig mit seinen Rädern endet, so greifen die oberen Enden der Koppelstäbe jeweils in der quer zur Drehachse des Rads verlaufenden Radmittelebene oder in der Ebene der Lagerstellen zwischen den Rädern an; besitzt der Radsatz über die Räder hinaus verlängerte Enden der Radachse so greifen die vertikalen Koppelstäbe an Adaptoren an, welche an den Außenseiten der Räder befestigt sind. Die vertikalen Koppelstäbe greifen dabei jeweils in der Ebene des Verformungsnullpunkts der jeweiligen Achsverlängerung am Adapter an. Die Erregerelemente der Aktuatoren betätigen die beiden vertikalen Koppelstäbe jeweils abwechselnd in oder nahe der Resonanzfrequenz nach einer Sinusschwingung.

Im Folgenden wird die Erfindung anhand der Zeichnung beschrieben; es zeigt
Fig. 1 den Prüfstand in perspektivischer Darstellung
Fig. 2 eine Vorderansicht des Prüfstands mit Adaptoren
Fig. 3 eine Draufsicht auf den Prüfstand
Fig. 4 eine Seitenansicht gemäß Pfeil IV der Fig. 2
Fig. 5 einen Schnitt durch die Fig. 2 mit Schnittebene V-V
Fig. 6 die Ansicht eines schematisch dargestellten Radsatzes mit beidseitigen Adaptoren und dynamischer Biegelinie
Fig. 7 den Biegemomentenverlauf bei 4-Punkt-Biegung
Fig. 8 in einem Axialschnitt die schematische Darstellung eines Aktuatoraufbaus und
Fig. 9 einen Querschnitt gemäß IX - IX der Fig. 8.

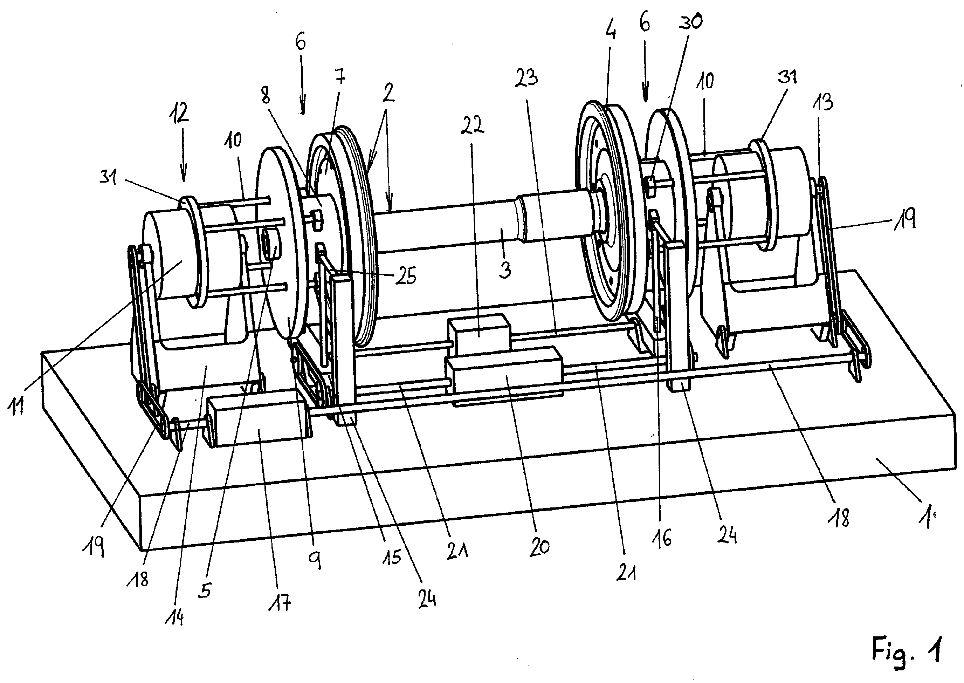

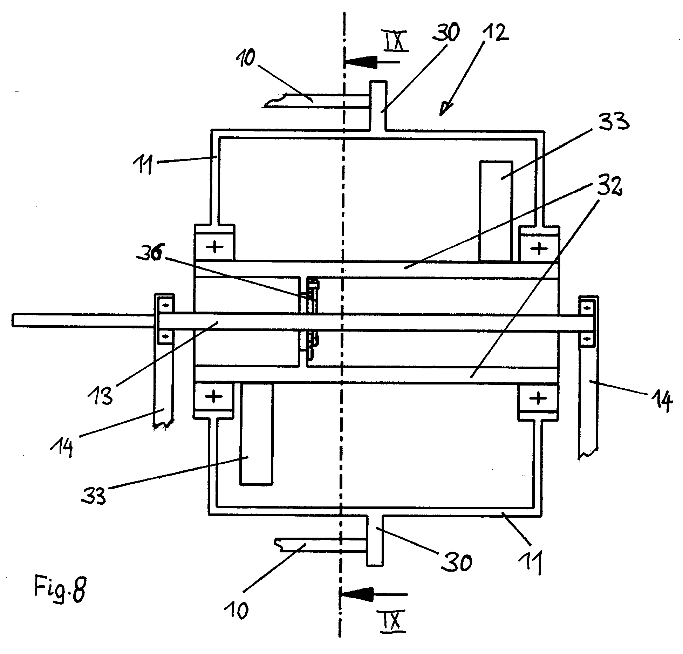

Fig. 1 zeigt einen Resonanzprüfstand, auf dessen Maschinentisch 1 ein Radsatz 2 eines Schienenfahrzeugs aufgebaut ist. Der Radsatz 2 besteht aus einer Radachse 3, auf welcher zwei Räder 4 drehfest befestigt sind. Die Radachse 3 ist auf beiden Seiten über die Räder 4 hinaus verlängert. Auf den verlängerten Wellenenden 5 sitzen Adaptoren 6, welche jeweils mit ihrem Befestigungsflansch 7 auf den zugeordneten Außenseiten der Räder 4 zentrisch befestigt sind. Neben dem Befestigungsflansch 7 besitzt jeder Adapter 6 eine Adapternabe 8, an deren Außenseite zum Wellenende 5 der Radachse 3 hin eine Schwungscheibe 9 vorgesehen ist. An der Adapternabe 8 innerhalb der Schwungscheibe 9 sind als Elemente der Schwingungsübertragung horizontale Koppelstäbe 10 zur Übertragung einer der Biegebelastung des Radsatzes 2 entsprechenden umlaufenden Biegeschwingung vorgesehen. Die Enden der Koppelstäbe 10 erstrecken sich durch Bohrungen in der Schwungscheibe 9 hindurch zu den Naben 8 der Adaptoren 6, wo sie in Art einer mechanischen Einspannung in Konsolen 30 spielfrei befestigt sind. Die gegenüberliegenden Enden der horizontalen Koppelstäbe 10 sind ebenfalls spielfrei in einer umlaufenden Wulst 31 am Aktuatorgehäuse 11 eines Aktuators 12 zur Erzeugung eines umlaufenden Erregermoments befestigt. Das Aktuatorgehäuse 11 ist auf einer (nicht dargestellten) Erregerwelle begrenzt beweglich gelagert, so dass es die Schwingungen der Erregerwelle im Inneren des Aktuatorgehäuses 11 mitmachen und diese über die horizontalen Koppelstäbe 10 und den Adapter 6 auf den Radsatz 2 übertragen kann. Eine Antriebsachse 13 zur Erregerwelle ist auf einem Lagerbock 14 gelagert, der auf dem Maschinentisch 1 abgestützt ist. Was die Ausbildung und Anordnung der Erregerwelle zur Erzeugung der Erregerschwingung betrifft, so sind mehrere Varianten vorstellbar; eine vorteilhafte Variante ist in Fig. 8 gezeigt.

Der Anschluss der Adaptoren 6 an den Radsatz 2 und die Zuordnung der oberen Aktuatoren 12 bezüglich des Prüflings sind bei einem Radsatz 2 symmetrisch ausgebildet. Gleiches gilt für die Anordnung und Ausbildung unterer Aktuatoren 15, welche zur Erzeugung der Erregerschwingung für vertikale, zueinander parallele Koppelstäbe 16 vorgesehen sind. Die Koppelstäbe 16 dienen zur Übertragung einer der Torsionsbelastung des Radsatzes 2 entsprechenden Torsionsschwingung. Auch die vertikalen Koppelstäbe 16 sind einerseits fest im Gehäuse der Aktuatoren 15, andererseits auf der Adapternabe 8 eingespannt.

Auf beiden Seiten des Radsatzes 2 sind zwei vertikale Koppelstäbe 16 vorgesehen, die der Übertragung der Erregerschwingung zur Verprobung der Torsionsbelastung dienen; ferner sind beidseits jeweils vier horizontale Koppelstäbe 10 zur Übertragung der Erregerschwingung zur Verprobung der Umlaufbiegung des Radsatzes 2 vorgesehen. Die horizontalen Koppelstäbe 10 sind gleichmäßig über einen Kreisumfang verteilt in einem gegenseitigen Winkelabstand von 90° angeordnet. Idealerweise genügen vier horizontale Koppelstäbe 10; auch ein mehrfaches von vier Koppelstäben ist möglich; eine weniger anspruchsvolle Ausführungsform mit nur drei horizontalen Koppelstäben bzw. deren Vielfaches ist bei einfach aufgebauten Prüflingen, die ein niedriges Gewicht aufweisen, denkbar, z.B. bei Radachsen ohne Räder.

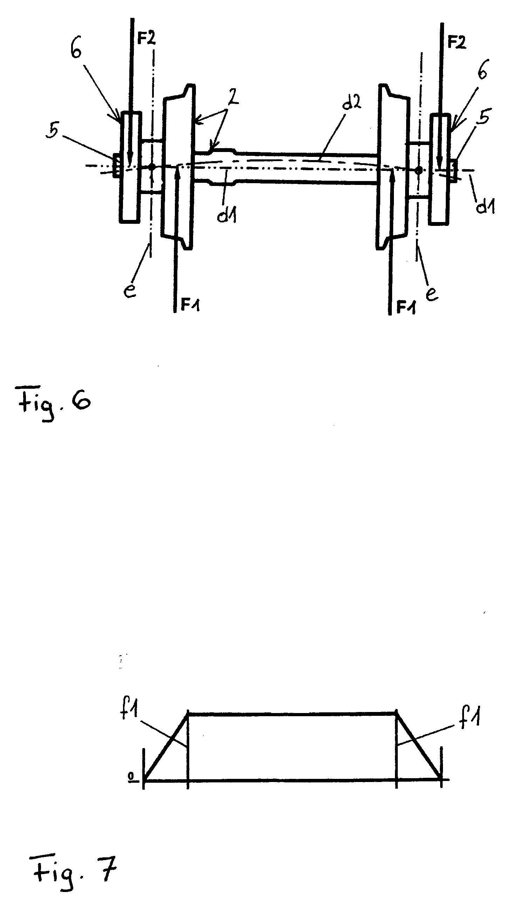

Sowohl die horizontalen Koppelstäbe 10 als auch die vertikalen Koppelstäbe 16 sind am jeweiligen Adapter 6 im Bereich der Adapternabe 8 in deren Querschnittsebene befestigt, welche durch den Verformungsnullpunkt der schwingenden Radachse verläuft. Durch Auswahl dieser Querschnittsebene des dynamischen Nullpunkts kann der Verlauf der Umlaufbiegung eines Prüflings über dessen gesamte Länge entweder im Bereich zwischen den Rädern als sogenannte 2-Punkt-Biegung oder bei Radsätzen mit seitlich verlängerten Wellenenden 5 als sogenannte 4-Punkt-Biegung (siehe Fig. 7) verprobt werden.

Die Antriebsachsen 13 der oberen Aktuatoren 12 für die Verprobung der Umlaufbiegung werden durch einen Antrieb 17 in Rotation versetzt, welcher über eine Antriebswelle 18 als Antrieb für beide Aktuatoren 12 dient. Beide Aktuatoren 12 werden somit synchron angetrieben, wobei Riementriebe 19 als Antriebsverbindung dienen.

Ein weiterer Antrieb 20 dient der Betätigung der unteren Aktuatoren 15 über eine gemeinsame Antriebswelle 21 für beide Aktuatoren 15.

Die beiden unteren Aktuatoren 15 zur Erzeugung der Erregerschwingung der vertikalen Koppelstäbe 16 zur Verprobung der Torsionsbelastung sind über ein Wendegetriebe 22 gekoppelt, welches über eine Verbindungswelle 23 deren Erregerschwingung gegensinnig steuert, so dass die vertikalen Koppelstäbe 16 der beiden Erreger 15 stets eine gegenläufige Kraft auf die Adaptoren 6 ausüben. Die Verbindungswelle 23 dient gleichzeitig als Drehmomentausgleich gegen ein Verdrehen des Radsatzes 2 um seine Drehachse.

Zwei den Adaptoren 6 zugeordnete vertikale Lagerstützen 24 dienen der Aufnahme von Seitenkräften. Dazu sind die Lagerstützen 24 über horizontale Stützstäbe 25 an die Adapternaben 8 angebunden.

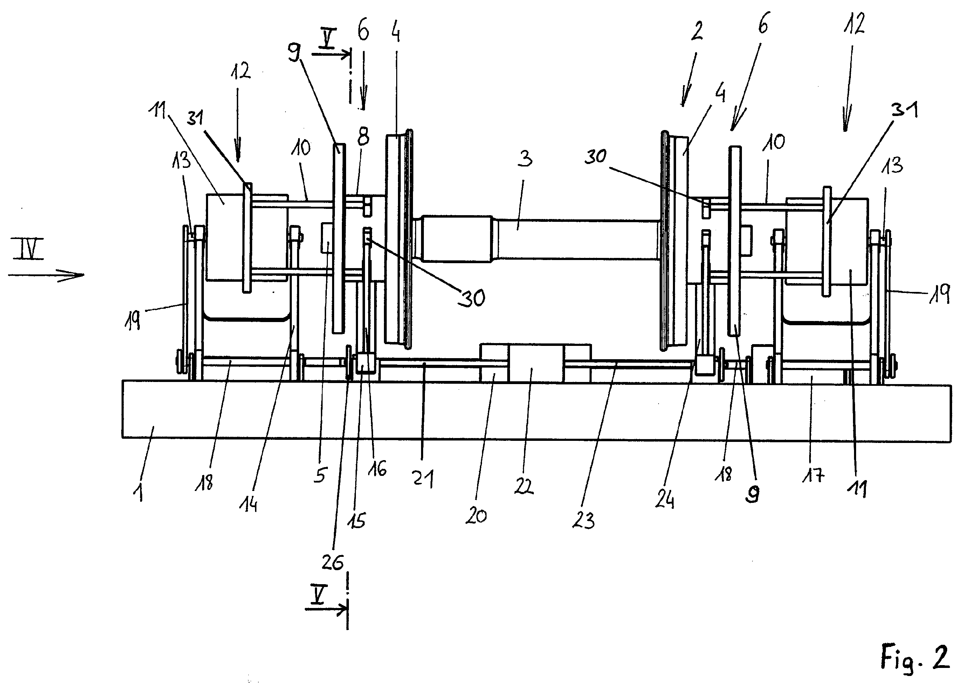

Fig. 2 zeigt eine Vorderansicht des Prüfstands für einen Radsatz 2. Alle Bauteile dieser Ansicht sind, soweit sie mit der Fig. 1 übereinstimmen, mit denselben Bezugszeichen versehen.

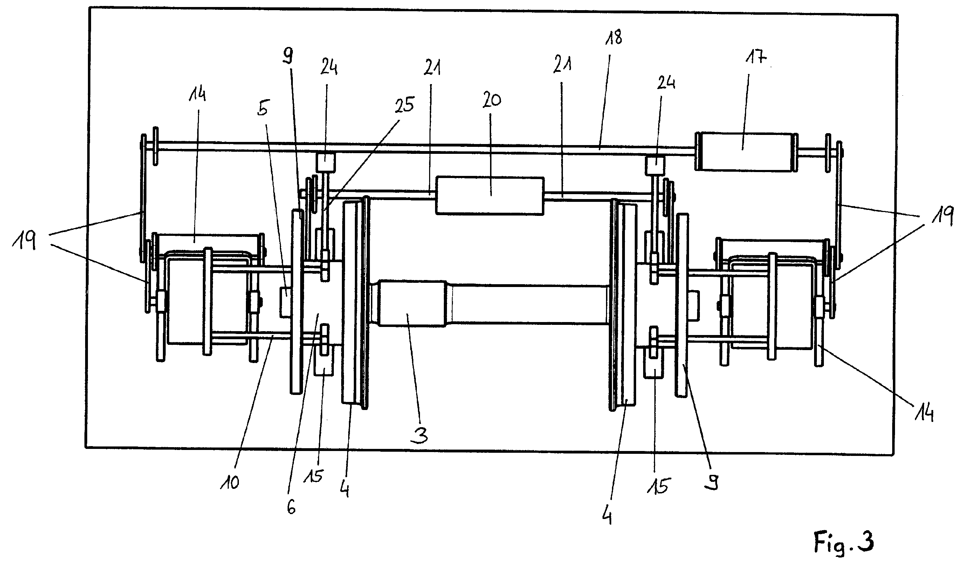

Fig. 3 zeigt eine Draufsicht auf den Prüfstand gemäß Fig. 2. Auch hier sind alle identischen Bauteile mit denselben Bezugszeichen wie in Fig. 2 versehen. Aus Vereinfachungsgründen ist das in den Figuren 1 und 2 gezeigte Wendegetriebe 22 in Fig. 3 weggelassen.

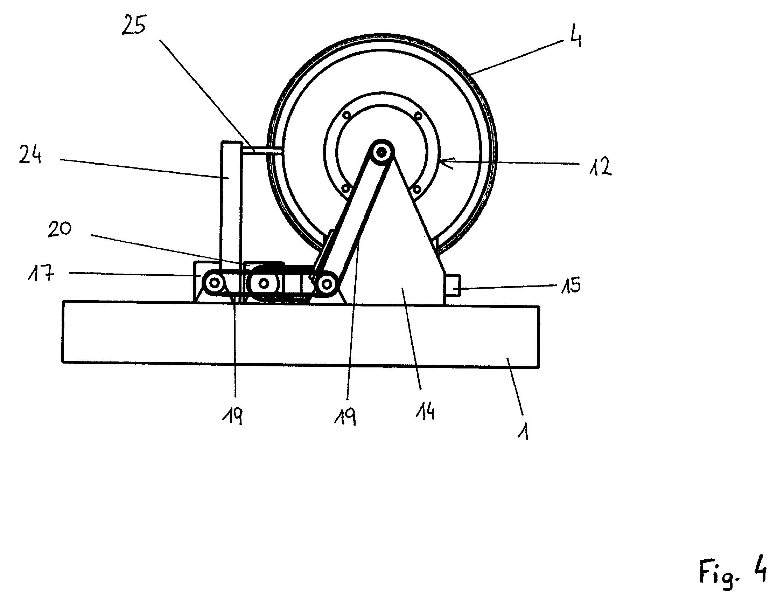

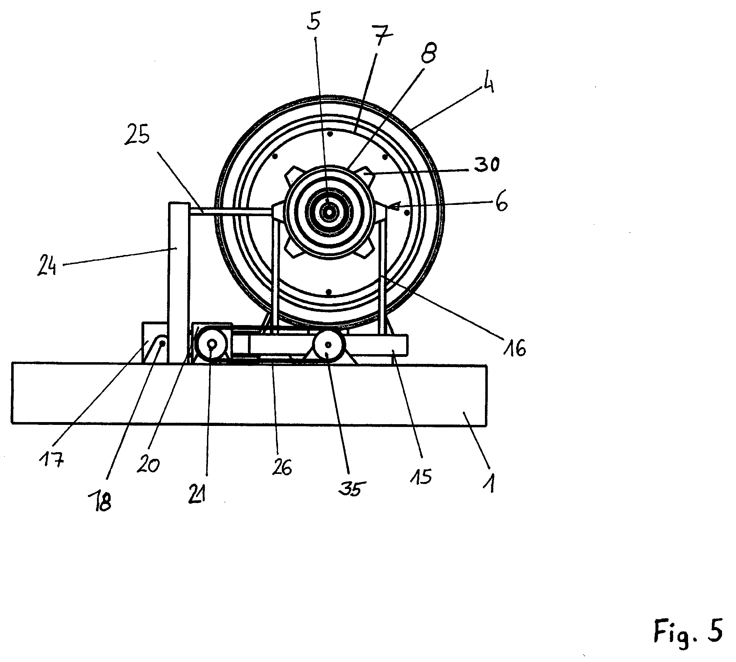

Fig. 4 zeigt eine Seitenansicht gemäß Pfeil IV der Fig. 2. Auf dem Maschinentisch 1 ist der Aktuator 12 auf seinem Lagerbock 14 abgestützt. Die Antriebsachse 13 des Aktuators 12 wird über einen Riementrieb 19 angetrieben. Die vertikale Lagerstütze 24 ist auf dem Maschinentisch 1 verankert; sie ist an ihrem oberen Ende über einen horizontalen Stützstab 25 gegen die von der Schwungmasse 9 des Adapters 6 verdeckte Nabe 8 des Adapters 6 abgestützt. Im Übrigen sind baugleiche Teile mit denselben Bezugszeichen wie in Fig. 2 versehen. Gleiches gilt für die Darstellung gemäß Fig. 5, welche einer Schnittebene V-V der Fig. 2 entspricht. In Fig. 5 ist auch der Riementrieb 26 von der Antriebswelle 21 auf eine zentrale Riemenscheibe 35 zum unteren Aktuator 15 für die Erregung der vertikalen Koppelstäbe 16 eingezeichnet.

Fig. 6 ist eine schematische Darstellung des Radsatzes 2 mit Adaptoren 6 auf beiden Seiten der nach außen überstehenden Wellenenden 5. Mit Bezug auf die zugeordnete Fig. 7 ist die Krafteinleitung in die Räder über die Kräfte F1 oder in die Adaptoren über die Kräfte F2 dargestellt. Der in Fig. 7 dargestellte Biegemomentenverlauf zeigt die sogenannte "4-Punkt-Biegung". Ohne Adaptoren 6 ist demgegenüber nur der Biegemomentenverlauf entsprechend der sogenannten "2-Punkt-Biegung" realisierbar, welche in der Verlängerung der Kräfte F1 (Fig. 6) mit den Randlinien f1 des Biegemomentenverlaufs gemäß Fig. 7 endet.

In Fig. 6 ist zudem der Verlauf der Drehachse des Radsatzes im Ruhezustand (d1) und im ausschwingenden Zustand (d2) unter Prüfbedingungen gezeichnet, wobei die Kurve d2 die Gerade d1 jeweils in der Ebene e durch den Verformungsnullpunkt (sog. Nullpunktebene) schneidet.

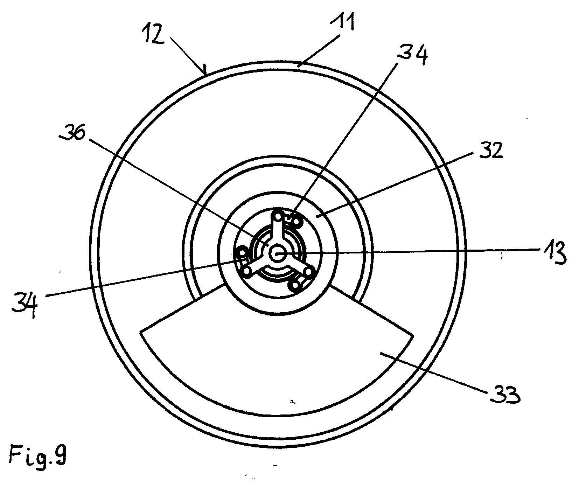

Fig. 8 und 9 zeigen in schematischer Darstellung Schnitte durch einen Aktuator 12 mit Aktuatorgehäuse 11, Antriebsachse 13 und Erregerwelle 32 in Art einer Hohlwelle, auf welcher zwei Exzentermassen 33 angebracht sind. Die Erregerwelle 32 ist an ihren Enden im Aktuatorgehäuse 11 gelagert und mittels dreier Pleuel 34 über einen mit der Antriebsachse 13 drehfest verbundenen Gelenkstern 36 mit der Antriebsachse 13 verbunden. Die zugeordneten Enden der Koppelstäbe 10 sind in Konsolen 30 des Aktuatorgehäuses 11, wie in Fig. 8 ersichtlich, elastisch eingespannt. Die Enden der Antriebsachse 13 sind in Lagerböcken 14 gelagert.

## Patentansprüche

1. Vorrichtung zur Belastungsprüfung rotatorischer Prüflinge durch mechanisches Einwirken periodisch oszillierender Kräfte wenigstens eines Schwingungssystems, wobei ein Prüfling auf einem Maschinentisch (1) feststehend abgestützt und in Richtung seiner Drehachse an seinen gegenüberliegenden Enden horizontal gelagert ist,
wobei zur Verprobung der Umlaufbiegung des Prüflings wenigstens ein Ende des Prüflings über mindestens drei gleichmäßig über einen Kreisumfang um die Drehachse des Prüflings angeordnete Koppelstäbe (10) mit wenigstens einem Aktuator (12) zur Erzeugung einer Erregerschwingung im wesentlichen spielfrei gekoppelt ist, derart, dass die Koppelstäbe (10) der Erregerschwingung entsprechende Kräfte auf den Prüfling übertragen,
wobei die Kräfte des Schwingungssystems mittels einer Steuereinrichtung im wesentlichen auf die oder nahe der Resonanzfrequenz des Schwingungssystems einstellbar sind, und wobei die Aktuatoren (12) jeweils ein auf einer rotierenden Erregerwelle (32) mit darauf versetzt angeordneten Exzentermassen (33) gelagertes Aktuatorgehäuse (11) umfassen, welches mit der Erregerwelle (32) ein Schwingungssystem bildet und mittels der Koppelstäbe (10) die Erregerschwingung auf den Prüfling überträgt.

2. Vorrichtung nach Anspruch 1, **dadurch gekennzeichnet,**
**dass** ein weiteres Schwingungssystem zur Verprobung der Torsionsbelastung des Prüflings vorgesehen ist, wobei der Prüfling über wenigstens zwei bezüglich seiner Drehachse gegenüberliegend und mit gleichen Abständen angeordneten im wesentlichen vertikalen Koppelstäben (16) mit einem auf dem Maschinentisch (1) abgestützten Aktuator (15) spielfrei gekoppelt ist.

3. Vorrichtung nach Anspruch 1 und/oder Anspruch 2, **dadurch gekennzeichnet,**
**dass** die Koppelstäbe (10, 16) einerseits mit dem Prüfling, andererseits mit einem Aktuator (12, 15) bei im wesentlichen fester Einspannung ihrer Enden verbunden sind.

4. Vorrichtung nach Anspruch 3, **dadurch gekennzeichnet,**
**dass** die Enden der Koppelstäbe (10, 16) jeweils mittels einer dreh- und beigeelastischen Fügeverbindung eingespannt sind.

5. Vorrichtung nach Anspruch 3, **dadurch gekennzeichnet,**
**dass** die Koppelstäbe (10, 16) mit dem Prüfling über daran befestigte Adaptoren (6) verbunden sind.

6. Vorrichtung nach Anspruch 5, **dadurch gekennzeichnet,**
**dass** die Adaptoren (6) jeweils als Nabenteil (8) mit einseitig daran vorgesehenem Befestigungsflansch (7) zur zentrischen Befestigung bezüglich der Drehachse des Prüflings ausgebildet sind.

7. Vorrichtung nach Anspruch 6, **dadurch gekennzeichnet,**
**dass** zentrisch am Nabenteil gegenüber dessen Befestigungsflansch (7) eine Schwungmasse (9) vorgesehen ist.

8. Vorrichtung nach Anspruch 1, **dadurch gekennzeichnet,**
**dass** die Aktuatoren (12) jeweils wenigstens ein Paar Exzentermassen (33) aufweisen, die zueinander um 180° versetzt auf der Erregerwelle (32) angeordnet sind.

9. Vorrichtung nach Anspruch 1, **dadurch gekennzeichnet,**
**dass** die Erregerwelle (32) radial begrenzt beweglich mit einer Antriebsachse (13) verbunden ist, die auf einem auf dem Maschinentisch (1) befestigten Lagerbock (14) gelagert ist, derart, dass bei laufender Erregung das Aktuatorgehäuse (11) eine Schwingungsbewegung durchführt, welche der Erregerschwingung entspricht.

10. Vorrichtung nach den Ansprüchen 1 und 2, zur Anwendung
als Resonanzprüfstand zur Verprobung der Umlaufbiegung und/oder der Torsionsbelastung von Radsätzen (2) für Schienenfahrzeuge mit Aktuatoren an den gegenüberliegenden Enden der die beiden Räder (4) tragenden Radachse (3), wobei die Radachse an ihren gegenüberliegenden Enden horizontal gelagert ist, **dadurch gekennzeichnet,**
**dass** an jedem Ende der Radachse (3) ein erster Aktuator (12) für die Verprobung der Umlaufbiegung über vier horizontale Koppelstäbe (10) mit dem zugeordneten Rad (4) und ein zweiter Aktuator (15) für die Verprobung der Torsionsbelastung über zwei vertikale Koppelstäbe (16) mit dem jeweiligen Rad (4) gekoppelt ist, und wobei der Radsatz (2) in horizontaler und in vertikaler Richtung zwischen allen Koppelstäben (10, 16) ortsfest abgestützt ist.

11. Vorrichtung nach Anspruch 10, **dadurch gekennzeichnet,**
**dass** der Radsatz (2) an beiden Enden mit lösbar angebauten Adaptoren (6) versehen ist, an welchen die Koppelstäbe (10, 16) befestigt sind und entsprechend der von den Aktuatoren (12, 15) jeweils erzeugten Erregerschwingung nach einer Sinusfunktion oszillierende Kräfte auf die Adaptoren (6) übertragen.

12. Vorrichtung nach Anspruch 11, **dadurch gekennzeichnet,**
**dass** die Radachse (3) jeweils über die Räder (4) hinaus verlängerte Wellenenden (5) besitzt und
**dass** die Adaptoren (6) jeweils außenseitig an den Rädern (4) der Radsätze (2) angebaut sind.

13. Vorrichtung nach Anspruch 11, **dadurch gekennzeichnet,**
**dass** die dem jeweiligen Aktuator (12, 15) fernen Enden der Koppelstäbe (10, 16) in oder nahe der Ebene des Verformungsnullpunkts des Radsatzes (2) oder seiner Radachse (3) am Adapter (6) befestigt sind.

## Claims

1. A device for testing the load on rotary test objects by mechanically applying periodically oscillating forces of at least one oscillation system,
wherein a test object is supported in a stationary manner on a machine table (1) and is mounted horizontally at the opposite ends thereof in the direction of the rotation axis thereof, wherein, to test the rotary bending of the test object, at least one end of the test object is coupled in a substantially play-free manner via at least three coupling rods (10), which are arranged evenly over a circumference around the rotation axis of the test object, to at least one actuator (12) for generating an exciting oscillation, in such a manner that the coupling rods (10) transmit forces corresponding to the exciting oscillation to the test object,
wherein the forces of the oscillation system can be set by means of a control device substantially to or close to the resonant frequency of the oscillation system,
and wherein the actuators (12) each comprise an actuator housing (11), which is mounted on a rotating exciter shaft (32) with eccentric masses (33) arranged in an offset manner thereon and which together with the exciter shaft (32) forms an oscillation system and transmits the exciting oscillation to the test object by means of the coupling rods (10).

2. The device according to Claim 1,
**characterised in that**
a further oscillation system is provided for testing the torsional load on the test object, wherein the test object is coupled in a play-free manner via at least two substantially vertical coupling rods (16), which are arranged equally spaced and opposite in relation to the rotation axis of the test object, to an actuator (15), which is supported on the machine table (1).

3. The device according to Claim 1 and/or Claim 2,
**characterised in that**
the coupling rods (10, 16) are connected on one side to the test object and on the other side to an actuator (12, 15), their ends being clamped in a substantially fixed manner.

4. The device according to Claim 3,
**characterised in that**
the ends of the coupling rods (10, 16) are each clamped by means of a rotationally and flexurally elastic join.

5. The device according to Claim 3,
**characterised in that**
the coupling rods (10, 16) are connected to the test object via adapters (6) fastened thereon.

6. The device according to Claim 5,
**characterised in that**
the adapters (6) are each in the form of a hub part (8) with a fastening flange (7) provided on one side thereof for central fastening in relation to the rotation axis of the test object.

7. The device according to Claim 6,
**characterised in that**
a flywheel mass (9) is provided centrally on the hub part opposite the fastening flange (7) thereof.

8. The device according to Claim 1,
**characterised in that**
the actuators (12) each have at least one pair of eccentric masses (33), which are arranged on the exciter shaft (32) offset to each other by 180°.

9. The device according to Claim 1,
**characterised in that**
the exciter shaft (32) is connected such that it can move in a radially limited manner to a drive axle (13), which is mounted on a bearing pedestal (14), which is fastened to the machine table (1), in such a manner that during excitation the actuator housing (11) executes an oscillating movement that corresponds to the exciting oscillation.

10. The device according to Claims 1 and 2, for use as a resonant test stand for testing the rotary bending and/or torsional load of wheel sets (2) for rail vehicles, having actuators at the opposite ends of the wheel axle (3) bearing the two wheels (4), the wheel axle being mounted horizontally at the opposite ends thereof,
**characterised in that**
at each end of the wheel axle (3), a first actuator (12) for testing the rotary bending is coupled to the associated wheel (4) via four horizontal coupling rods (10) and a second actuator (15) for testing the torsional load is coupled to the respective wheel (4) via two vertical coupling rods (16), and wherein the wheel set (2) is supported in a stationary manner in the horizontal and vertical directions between all the coupling rods (10, 16).

11. The device according to Claim 10,
**characterised in that**
the wheel set (2) is provided at both ends with detachably attached adapters (6), to which the coupling rods (10, 16) are fastened and transmit to the adapters (6) forces that oscillate according to a sine function in a corresponding manner to the exciting oscillation generated by each of the actuators (12, 15).

12. The device according to Claim 11,
**characterised in that**
the wheel axle (3) has shaft ends (5), which each extend beyond the wheels (4), and the adapters (6) are each attached to the outside of the wheels (4) of the wheel sets (2).

13. The device according to Claim 11,
**characterised in that**
the ends of the coupling rods (10, 16) that are remote from the respective actuator (12, 15) are fastened to the adapter (6) in or close to the plane of the deformation zero point of the wheel set (2) or of the wheel axle (3) thereof.

## Revendications

1. Dispositif pour le test de charge d'échantillons rotatifs par l'action mécanique de forces périodiquement oscillantes d'au moins un système oscillatoire,
dans lequel un échantillon est appuyé fixement sur une table de machine (1) et monté horizontalement à ses extrémités opposées dans la direction de son axe de rotation,
dans lequel, pour la validation de la courbure périphérique de l'échantillon, au moins une extrémité de l'échantillon est accouplée quasiment sans jeu à au moins un actionneur (12) pour produire des oscillations d'excitation, par le biais d'au moins trois tiges d'accouplement (10) disposées de façon régulière sur une circonférence autour de l'axe de rotation de l'échantillon, de telle façon que les tiges d'accouplement (10) de l'oscillation d'excitation transmettent des forces correspondantes à l'échantillon,
dans lequel les forces du système oscillatoire peuvent être réglées quasiment sur la fréquence de résonnance du système oscillatoire ou sur une fréquence proche de celle-ci, au moyen d'un dispositif de commande,
et dans lequel les actionneurs (12) comprennent respectivement un boîtier d'actionneur (11) monté sur un arbre d'excitation rotatif (32) avec des masses excentriques (33) disposées de façon décalée sur celui-ci, lequel forme un système oscillatoire ensemble avec l'arbre d'excitation (32) et transmet l'oscillation d'excitation à l'échantillon au moyen des tiges d'accouplement (10).

2. Dispositif selon la revendication 1, **caractérisé en ce qu'**il est prévu un autre système oscillatoire pour la validation de la charge de torsion de l'échantillon, dans lequel l'échantillon est accouplé sans jeu à un actionneur (15) appuyé sur la table de machine (1) par le biais d'au moins deux tiges d'accouplement quasiment verticales (16) disposées à distances égales et à l'opposé par rapport à l'axe de rotation de celui-ci.

3. Dispositif selon la revendication 1 et/ou la revendication 2, **caractérisé en ce que**
les tiges d'accouplement (10, 16) sont reliées d'une part à l'échantillon, d'autre part à un actionneur (12, 15), lorsque les extrémités de celles-ci sont serrées fermement.

4. Dispositif selon la revendication 3, **caractérisé en ce que** les extrémités des tiges d'accouplement (10, 16) sont serrées respectivement au moyen d'un assemblage de jonction élastique en rotation ou en flexion.

5. Dispositif selon la revendication 3, **caractérisé en ce que** les tiges d'accouplement (10, 16) sont reliées à l'échantillon par des adaptateurs (6) fixés à celles-ci.

6. Dispositif selon la revendication 5, **caractérisé en ce que** les adaptateurs (6) sont formés respectivement comme une partie de moyeu (8) avec une bride de fixation (7) prévue unilatéralement sur celle-ci, pour la fixation centrale par rapport à l'axe de rotation de l'échantillon.

7. Dispositif selon la revendication 6, **caractérisé en ce qu'**il est prévu une masse d'inertie (9) disposée de façon centrale sur la partie de moyeu, à l'opposé de la bride de fixation (7) de celle-ci.

8. Dispositif selon la revendication 1, **caractérisé en ce que** les actionneurs (12) présentent respectivement au moins une paire de masses excentriques (33), lesquelles sont disposées de façon à être décalées de 180° l'une par rapport à l'autre sur l'arbre d'excitation (32).

9. Dispositif selon la revendication 1, **caractérisé en ce que** l'arbre d'excitation (32) est relié de façon mobile et délimitée radialement à un axe d'entraînement (13), lequel est monté sur un bloc de support (14) fixé à la table de machine (1), de telle façon que lors d'une excitation continue, le boîtier d'actionneur (11) effectue un mouvement oscillatoire correspondant à l'oscillation d'excitation.

10. Dispositif selon les revendications 1 et 2, destiné à une utilisation comme banc d'essai de résonnance pour la validation de la courbure périphérique et/ou de la charge de torsion de jeux de roues (2) pour des véhicules ferroviaires, avec des actionneurs aux extrémités opposées de l'axe de roue (3) supportant les deux roues (4), l'axe de roue étant monté horizontalement à ses extrémités opposées,
**caractérisé en ce que**
à chaque extrémité de l'axe de roue (3), un premier actionneur (12) est accouplé à la roue correspondante (4) par le biais de quatre tiges d'accouplement horizontales (10) pour la validation de la courbure périphérique, et un deuxième actionneur (15) est accouplé à la roue respective (4) par le biais de deux tiges d'accouplement verticales (16) pour la validation de la charge de torsion, et dans lequel le jeu de roues (2) est appuyé fixement dans la direction horizontale et verticale entre toutes les tiges d'accouplement (10, 16).

11. Dispositif selon la revendication 10, **caractérisé en ce que** le jeu de roues (2) est doté d'adaptateurs (6) montés aux deux extrémités de façon amovible, sur lesquels les tiges d'accouplement (10, 16) sont fixées et transmettent des forces oscillantes aux adaptateurs (6) selon une fonction sinusoïdale en fonction des oscillations d'excitation produites respectivement par les actionneurs (12, 15).

12. Dispositifs selon la revendication 11, **caractérisé en ce que** l'axe de roue (3) présente extrémités d'arbre (5) se prolongeant respectivement au-delà des roues (4), et **en ce que** les adaptateurs (6) sont montés respectivement du côté extérieur sur les roues (4) des jeux de roues (2).

13. Dispositif selon la revendication 11, **caractérisé en ce que** les extrémités des tiges d'accouplement (10, 16) respectivement éloignées de l'actionneur (12, 15) correspondant sont fixées sur l'adaptateur (6), dans le plan du point de déformation zéro du jeu de roues (2) ou de l'axe de roue (3) de celui-ci, ou à proximité dudit plan.
